# EUROPÄISCHE PATENTSCHRIFT

(11) **EP 3 093 496 B1**
(45) Veröffentlichungstag und Bekanntmachung des Hinweises auf die Patenterteilung: **06.03.2019**
(21) Anmeldenummer: 15167836.4
(22) Anmeldetag: 15.05.2015
(51) Int. Cl.: F04D 19/04, F04D 29/38, B23P 15/00

(54) **ROTOR EINER VAKUUMPUMPE**
ROTOR OF A VACUUM PUMP
ROTOR POUR POMPE À VIDE

(43) Veröffentlichungstag der Anmeldung: 16.11.2016
(73) Patentinhaber: PFEIFFER VACUUM GMBH, 35614 Asslar (DE)
(72) Erfinder: Hofmann, Jan, 35305 Grünberg (DE)
(74) Vertreter: Manitz Finsterwald Patentanwälte PartmbB

(56) Entgegenhaltungen:
- WO-A1-03/076809
- DE-A1- 10 103 230
- JP-A- H02 201 100
- JP-A- 2003 013 880
- JP-A- 2013 092 063
- US-A1- 2012 148 390
- US-B1- 6 412 173

## Beschreibung

Die vorliegende Erfindung betrifft einen Rotor einer Vakuumpumpe, insbesondere einer Turbomolekularpumpe, mit einer um eine Rotorachse drehbar gelagerten Rotorwelle und mehreren an der Rotorwelle angeordneten, in axialer Richtung aufeinanderfolgenden, jeweils mehrere Rotorschaufeln umfassenden Rotorebenen. Sie betrifft ferner ein Verfahren zur Herstellung eines Rotors einer Vakuumpumpe, insbesondere einer Turbomolekularpumpe. Die Erfindung betrifft auch eine Vakuumpumpe mit einem derartigen Rotor.

Bisher werden Rotorscheiben für Vakuumpumpen der eingangs genannten Art einzeln mit einer Mehrzahl von insbesondere Säge- und/oder Frässchritten hergestellt und anschließend auf die Rotorwelle gefügt. Dabei können die Rotorscheiben insbesondere bezüglich des Anstellwinkels gegenüber der jeweiligen zur Rotorachse senkrechten Rotorebene und bezüglich der Anzahl von Rotorschaufeln bedingt durch die Art und Weise der Fertigung unterschiedliche Geometrien besitzen.

Da zum Aufbau eines Rotors für eine entsprechende Vakuumpumpe in der Regel eine Vielzahl unterschiedlicher Rotorscheiben verfügbar sein muss, ist der Fertigungsaufwand relativ hoch, zumal für die Herstellung der Rotorscheiben jeweils eine hohe Anzahl einzelner Säge- und/oder Fräsvorgänge erforderlich ist. Zudem ist die Rotorschaufelstruktur des Rotors für die Effizienz bzw. für das Saugvermögen der Vakuumpumpe ein wesentliches Kriterium.

In der US 2012/148390 A1 ist eine Vakuumpumpe, insbesondere Turbomolekularpumpe, mit einer drehbar gelagerten Rotorwelle beschrieben, die mit Rotorschaufeln versehen ist, die in in axialer Richtung aufeinanderfolgenden, jeweils mehrere Rotorschaufeln umfassenden Rotorebenen angeordnet sind. Die Anzahl der Rotorschaufeln in den verschiedenen Rotorebenen nimmt in Axialrichtung zunächst zu, um anschließend wieder abzunehmen.

In der JP H02201100 A ist eine Molekularpumpe beschrieben, bei der die Anzahl der Rotorschaufeln im Vakuumbereich geringer ist als die Anzahl der Rotorschaufeln im Niedervakuumbereich.

Bei einer aus der DE 101 03 230 A1 bekannten Turbomolekularpumpe besitzt eine dem Hochvakuumbereich zugeordnete erste (obere) Rotorschaufelreihe eine größere Anzahl von Rotorschaufeln als eine dem Niedervakuumbereich zugeordnete (untere) Rotorschaufelreihe.

In der JP 2003013880 A1 ist eine Turbomolekularpumpe beschrieben, deren Rotor drei Rotorebenen mit einer unterschiedlichen Anzahl von Rotorschaufeln aufweist.

In der US 6 412 173 B1 ist ein Verfahren zur Herstellung des Rotors einer Turbomolekularpumpe beschrieben, bei dem in einen rotationssymmetrischen Rohling einerseits eine Mehrzahl von spiralförmigen Einschnitten und andererseits eine Mehrzahl von radialen Einschnitten eingebracht werden, um die Rotorschaufeln zu erzeugen. Dabei können zunächst die spiralförmigen Einschnitte oder auch zunächst die radialen Einschnitte eingebracht werden.

In der WO 03/076809 A1 ist ein Verfahren zur Herstellung eines einstückigen Rotors für eine Reibungsvakuumpumpe beschrieben, die zumindest abschnittsweise als Turbomolekularpumpe mit Rotorschaufeln und Statorschaufeln ausgebildet ist. Der Rotor besitzt eine Nabe, die auf ihrer Umfangsfläche die Pumpstrukturen trägt. Dabei bestehen die rotorseitigen Pumpstrukturen zumindest abschnittsweise aus in Reihen angeordneten Schaufeln, die durch spanabhebende Operationen an der Oberfläche eines Rohlings ausgebildet werden, in den radiale Umfangsnuten und eine oder mehrere Gewindenuten eingebracht werden.
Der Erfindung liegt die Aufgabe zugrunde, einen Rotor einer Vakuumpumpe, insbesondere einer Turbomolekularpumpe, sowie eine Vakuumpumpe mit zumindest einem Rotor der eingangs genannten Art anzugeben, dessen Rotorschaufelstruktur zur Erhöhung der Effizient der Vakuumpumpe weiter optimiert ist. Ferner soll ein möglichst einfaches und kostengünstiges Verfahren zur Herstellung eines solchen Rotors einer Vakuumpumpe, insbesondere einer Turbomolekularpumpe, angegeben werden.
Erfindungsgemäß wird die Aufgabe durch einen Rotor einer Vakuumpumpe, insbesondere einer Turbomolekularpumpe, mit den Merkmalen des Anspruchs 1, durch eine Vakuumpumpe mit den Merkmalen des Anspruchs 7 sowie durch ein Verfahren mit den Merkmalen des Anspruchs 8 gelöst. Bevorzugte Ausführungsformen des erfindungsgemäßen Rotors und bevorzugte Ausgestaltungen des erfindungsgemäßen Verfahrens ergeben sich aus den Unteransprüchen. Der erfindungsgemäße Rotor einer Vakuumpumpe, insbesondere einer Turbomolekularpumpe, umfasst einen Rotor mit einer um eine Rotorachse drehbar gelagerten Rotorwelle und mehreren an der Rotorwelle angeordneten, in axialer Richtung aufeinanderfolgenden, jeweils mehrere Rotorschaufeln umfassenden Rotorebenen. Die Anzahl von Rotorschaufeln in einer jeweiligen Rotorebene ist im ansaugseitigen Hochvakuumbereich der Vakuumpumpe geringer als in einer jeweiligen Rotorebene im Vorvakuum- oder Niedervakuumbereich der Vakuumpumpe. Insbesondere ist die Anzahl Rotorschaufeln pro Rotorebene im Hochvakuumbereich um das 2- bis 4-fache geringer als im Vorvakuum- oder Niedervakuumbereich. Der Rotor umfasst schrägstehende Rotorschaufeln. In jeder Rotorebene besitzen jeweils alle Rotorschaufeln den gleichen Anstellwinkel. Dabei ist dieser einheitliche Anstellwinkel in allen Rotorebenen gleich und liegt im Bereich von 20° bis 35° gegenüber der jeweiligen zur Rotorachse senkrechten Rotorebene.
Aufgrund dieser Ausbildung ergibt sich eine optimale Rotorschaufelstruktur, durch die die Effizienz der Vakuumpumpe entsprechend erhöht wird.
Der Rotor kann aus einem Vollmaterial hergestellt, also einstückig ausgebildet sein. Alternativ kann der Rotor auch aus einer Mehrzahl von separaten, unabhängig voneinander, d.h. nicht zwingend gleichzeitig in einem Herstellungsprozess hergestellten Rotorscheiben bestehen, die zur Bildung des Rotors axial übereinander und auf einer gemeinsamen Rotorwelle angeordnet sind.
Die Erfindung ist folglich unabhängig davon, ob der Rotor einstückig ausgebildet ist oder einen Aufbau aus einzelnen Rotorscheiben aufweist.
Bevorzugt ist der Rotor in zumindest zwei in Axialrichtung aufeinanderfolgende Bereiche unterschiedlicher Anzahl von Rotorschaufeln in den jeweiligen Rotorebenen unterteilt, wobei die Anzahl von Rotorschaufeln in einer jeweiligen Rotorebene in Axialrichtung betrachtet ausgehend vom Hochvakuumbereich der Vakuumpumpe zum Vorvakuum- oder Niedervakuumbereich der Vakuumpumpe hin zunimmt.
Alternativ oder zusätzlich kann gemäß einer Ausführungsform der Erfindung der Rotor zwei oder mehr in Axialrichtung aufeinanderfolgende Bereiche unterschiedlicher Anzahl von Rotorschaufeln in den jeweiligen Rotorebenen aufweisen, wobei die Anzahl von Rotorschaufeln in einer jeweiligen Rotorebene in Axialrichtung betrachtet ausgehend vom Hochvakuumbereich der Vakuumpumpe zum Vorvakuum- oder Niedervakuumbereich der Vakuumpumpe hin abnimmt.

Gemäß einer vorteilhaften Ausführungsform des erfindungsgemäßen Rotors ist der Rotor in zwei in Axialrichtung aufeinanderfolgende Bereiche unterschiedlicher Anzahl von Rotorschaufeln in den jeweiligen Rotorebenen unterteilt, wobei die Anzahl von Rotorschaufeln in einer jeweiligen Rotorebene im Hochvakuumbereich um das 2-fache geringer ist als die Anzahl von Rotorschaufeln in einer jeweiligen Rotorebene im darauffolgenden Bereich der Vakuumpumpe.
Gemäß einer alternativen vorteilhaften Ausführungsform des erfindungsgemäßen Rotors ist der Rotor in drei in Axialrichtung aufeinanderfolgende Bereiche unterschiedlicher Anzahl von Rotorschaufeln in den jeweiligen Rotorebenen unterteilt, wobei die Anzahl von Rotorschaufeln in einer jeweiligen Rotorebene im Hochvakuumbereich um das 2-fache geringer ist als die Anzahl von Rotorschaufeln in einer jeweiligen Rotorebene im darauffolgenden Bereich, insbesondere in einem Mittelvakuumbereich, der Vakuumpumpe und um das 3-fache oder 4-fache geringer ist als die Anzahl von Rotorschaufeln in einer jeweiligen Rotorebene in einem Vorvakuum- oder Niedervakuumbereich der Vakuumpumpe.
Gemäß einer weiteren vorteilhaften Ausführungsform des erfindungsgemäßen Rotors ist der Rotor in vier in Axialrichtung aufeinanderfolgende Bereiche unterschiedlicher Anzahl von Rotorschaufeln in den jeweiligen Rotorebenen unterteilt, wobei die Anzahl von Rotorschaufeln in einer jeweiligen Rotorebene ausgehend vom Hochvakuumbereich zum Vorvakuum- oder Niedervakuumbereich der Vakuumpumpe hin im Verhältnis 1:2:3:4 zunimmt.

Erfindungsgemäß wird die Rotorschaufelstruktur ausgehend vom Vorvakuum- oder Niedervakuumbereich zum Hochvakuumbereich der Vakuumpumpe hin offener. Die Offenheit ist hier im Sinne einer Lichtdurchlässigkeit in axialer Richtung zu verstehen, d.h. je geschlossener die Struktur der Rotorschaufeln in einem bestimmten axialen Bereich, z.B. über eine Rotorebene hinweg, des Rotors ist, desto kleiner sind die in Umfangsrichtung jeweils zwischen zwei aufeinanderfolgendene Schaufeln vorhandenen Zwischenräume, zwischen denen Licht durch diesen axialen Bereich des Rotors hindurch gelangen kann.

Erfindungsgemäß umfasst der Rotor Rotorschaufeln, deren Anstellwinkel gegenüber der jeweiligen zur Rotorachse zumindest senkrechten Rotorebene in einem Bereich von 20° bis 35° liegt.

Erinfdungsgemäß besitzen in jeder Rotorebene jeweils alle Rotorschaufeln den gleichen Anstellwinkel, wobei dieser einheitliche Anstellwinkel in allen Rotorebenen gleich ist.
Des Weiteren ist bevorzugt vorgesehen, dass zumindest zwei Rotorebenen sich hinsichtlich der axialen Höhe ihrer Rotorschaufeln voneinander unterscheiden. Die axiale Höhe angestellter Rotorschaufeln bestimmt die Offenheit dieser Schaufelstruktur. Das Entfernen von Rotorschaufeln in einer Rotorebene erhöht die Offenheit ersichtlich ebenfalls. Die axiale Höhe der Rotorschaufeln in einer Rotorebene kann eine Funktion der nominellen Anzahl der Rotorschaufeln in dieser Rotorebene sein, also der Anzahl der Rotorschaufeln vor einer gegebenenfalls erfolgenden Entfernung von Rotorschaufeln aus dieser Rotorebene. Diese Funktion kann in Abhängigkeit von dem gewünschten oder erforderlichen Saugverhalten der Vakuumpumpe gewählt werden.
Insbesondere sind die Rotorwelle und die Rotorschaufeln einstückig miteinander ausgebildet. Der Rotor ist bevorzugt aus einem aus Vollmaterial bestehenden, insbesondere zylindrischen, Grundkörper hergestellt.
Das erfindungsgemäße Verfahren zur Herstellung eines Rotors einer Vakuumpumpe, insbesondere einer Turbomolekularpumpe, zeichnet sich dadurch aus, dass der eine Rotorwelle und mehrere an der Rotorwelle angeordnete Rotorschaufeln umfassende Rotor einstückig aus einem aus Vollmaterial bestehenden zylindrischen Grundkörper gefertigt wird, indem zur Erzeugung von mehreren an der Rotorwelle angeordneten, in axialer Richtung aufeinanderfolgenden, jeweils mehrere Rotorschaufeln umfassenden Rotorebenen ein Gewinde in den zylindrischen Grundkörper geschnitten und in unterschiedlichen zur Rotorachse jeweils zumindest im Wesentlichen senkrechten Ebenen Freistiche in den Grundkörper eingebracht werden, und anschließend zur Erzeugung einer in Axialrichtung betrachtet zum Hochvakuumbereich der Vakuumpumpe hin offeneren Rotorschaufelstruktur ein Teil der erzeugten Rotorschaufeln zumindest einer Rotorebene im Hochvakuumbereich der Vakuumpumpe entfernt wird.

Aufgrund dieser Ausgestaltung des Verfahrens kann der Rotor mit relativ geringem Aufwand und damit entsprechend kostengünstig hergestellt werden.

Dabei kann gemäß einer vorteilhaften Ausgestaltung des erfindungsgemäßen Verfahrens zur Erzeugung der jeweils mehrere Rotorschaufeln umfassenden Rotorebenen zunächst das Gewinde in den zylindrischen Grundkörper geschnitten werden. Anschließend werden dann die Freistiche in unterschiedlichen zur Rotorachse jeweils zumindest im Wesentlichen senkrechten Ebenen eingebracht.

Gemäß einer alternativen Ausgestaltung des erfindungsgemäßen Verfahrens werden zur Erzeugung der jeweils mehrere Rotorschaufeln umfassenden Rotorebenen zunächst die Freistiche in unterschiedlichen zur Rotorachse jeweils zumindest im Wesentlichen senkrechten Ebenen in den Grundkörper eingebracht, wobei anschließend das Gewinde in den zylindrischen Grundkörper geschnitten wird.

Es kann ein eingängiges oder mehrgängiges Gewinde in den zylindrischen Grundkörper geschnitten werden.

Zweckmäßigerweise wird das Gewinde mittels einer kreisförmigen Sägescheibe oder Scheibenfräsers in den zylindrischen Grundkörper geschnitten.

Die Freistiche werden zweckmäßigerweise auf einer Drehbank oder mittels einer Sägescheibe oder Scheibenfräsers in den zylindrischen Grundkörper eingebracht.

Durch unterschiedliche axiale Abstände zwischen den Freistichen können Rotorschaufeln entsprechend unterschiedlicher axialer Höhe erzeugt werden.

Bevorzugt werden schrägstehende Rotorschaufeln erzeugt, deren Anstellwinkel gegenüber der jeweiligen zur Rotorachse zumindest im Wesentlichen senkrechten Rotorebene durch die Steigung des Gewindes im Bereich dieser Rotorebene bestimmt wird.

Mit dem Einschneiden eines Gewindes und dem Einbringen von Einstichen in den aus Vollmaterial bestehenden zylindrischen Grundkörper entstehen zunächst Rotorebenen mit einer gleichen Anzahl von Rotorschaufeln. Je nachdem, wie die axialen Abstände beim Freistechen gewählt werden, erstrecken sich die schrägstehenden Rotorschaufeln unterschiedlich weit in axialer Höhe. Der Anstellwinkel der Rotorschaufeln gegenüber der jeweiligen zur Rotorachse senkrechten Rotorebene ist durch die Steigung des in den zylindrischen Grundkörper eingebrachten Gewindes bestimmt. Die axiale Erstreckung der einzelnen Rotorebenen und damit deren axiale Rotorschaufelhöhe kann variieren. Dabei können die Rotorschaufeln beispielsweise im Hochvakuumbereich eine größere axiale Erstreckung besitzen als in den anderen Bereichen.

Wie bereits erwähnt, kann entweder zuerst das Gewinde geschnitten und anschließend die Freistiche eingebracht oder auch es können auch zuerst die Freistiche eingebracht und erst dann das Gewinde geschnitten werden. Anschließend wird zur Erzeugung einer in Axialrichtung betrachtet zum Hochvakuumbereich der Vakuumpumpe hin offeneren, d.h. lichtdurchlässigeren Rotorschaufelstruktur ein Teil der erzeugten Rotorschaufeln zumindest einer Rotorebene im Hochvakuumbereich der Vakuumpumpe entfernt. Die Entfernung der jeweiligen Rotorschaufeln kann beispielsweise mittels eines Fingerfräsers oder dergleichen erfolgen. Im Hochvakuumbereich der Vakuumpumpe überlappen sich die Rotorschaufeln bevorzugt nicht, so dass dort eine vergleichsweise offene Schaufelstruktur vorhanden ist. Vorzugsweise liegt auch in einem gegebenenfalls vorhandenen Mittelvakuumbereich noch keine Überlappung der Rotorschaufeln vor. Insbesondere ergibt sich erst im Vorvakuum- oder Niedervakuumbereich der Vakuumpumpe eine Überlappung der Rotorschaufeln. Dabei können im Vorvakuum- oder Niedervakuumbereich alle durch das Gewindeschneiden und die Freistiche erzeugten Rotorschaufeln beibehalten werden.

Es kann beispielsweise ein bis zu 36-gängiges Gewinde in den aus Vollmaterial bestehenden zylindrischen Grundkörper geschnitten werden, so dass im Vorvakuum- oder Niedervakuumbereich der Vakuumpumpe sechsunddreißig Schaufeln pro Rotorebene erzeugt werden. Im Mittelvakuumbereich kann dann beispielsweise jede zweite Rotorschaufel entfernt werden, während im Hochvakuumbereich beispielsweise nur jede dritte Rotorschaufel stehenbleibt. Man erhält dann für die Anzahl von Rotorschaufeln in den Rotorebenen ausgehend vom Vorvakuum- oder Niedervakuumbereich der Vakuumpumpe beispielsweise ein Verhältnis von 3:2:1 betreffend die Anzahl von Rotorschaufeln pro Rotorebene.

Grundsätzlich kann das in den aus Vollmaterial bestehenden Grundkörper einzubringende Gewinde auch eine andere Anzahl von Gängen, d.h. eine andere Gängigkeit, besitzen und eine andere Rotorschaufelstruktur gewählt werden, wobei vorzugsweise die Anzahl der Rotorschaufeln in einer jeweiligen Rotorebene im ansaugseitigen Hochvakuumbereich der Vakuumpumpe um das 2- bis 4-fache geringer ist als in einer jeweiligen Rotorebene im Vorvakuum- oder Niedervakuumbereich der Vakuumpumpe.

Um sicherzustellen, dass keine Unwuchten entstehen, sind die Rotorschaufeln in den verschiedenen Rotorebenen bevorzugt jeweils in Umfangsrichtung gleichmäßig verteilt.

Werden gewissermaßen die oberen und unteren Kanten der Rotorschaufeln beim Freistechen beispielsweise mittels einer kreisförmigen Sägescheibe oder Scheibenfräsers abgetragen bzw. können durch diese Art der Fertigung obere und untere Kanten an den Rotorschaufeln überhaupt nicht entstehen, so sind die Querschnitte der Rotorschaufeln jeweils anstatt rechteckförmig insbesondere parallelogrammförmig.

Wie bereits erwähnt, liegt der Anstellwinkel der Rotorschaufeln erfindungsgemäß im Bereich von 20° bis 35°. Ein bevorzugter Wert des Anstellwinkels liegt im Bereich von 27°.
Beispielsweise bei Verwendung einer in radialer Richtung eine konstante Dicke aufweisenden kreisförmigen Sägescheibe oder Scheibenfräsers ergeben sich Rotorschaufeln von konstantem Querschnitt in radialer Richtung. Grundsätzlich können die Einstiche und das Gewinde jedoch auch beispielsweise mittels einer in radialer Richtung eine zunehmende oder abnehmende Dicke aufweisenden Sägescheibe oder Scheibenfräsers eingebracht werden, wodurch sich Rotorschaufeln mit sich in radialer Richtung konisch erweiterndem oder verjüngendem Querschnitt ergeben.
Die Erfindung wird im Folgenden anhand von Ausführungsbeispielen unter Bezugnahme auf die Zeichnung näher erläutert; in dieser zeigen:
- Fig. 1: eine schematische Darstellung einer beispielhaften Ausführungsform einer Vakuumpumpe, die mit einem erfindungsgemäßen Rotor versehen werden kann,
- Fig. 2: eine schematische Darstellung eines beispielhaften aus Vollmaterial bestehenden zylindrischen Grundkörpers, aus dem ein erfindungsgemäßer Rotor einer Vakuumpumpe, insbesondere einer Turbomolekularpumpe, nach dem erfindungsgemäßen Verfahren herstellbar ist,
- Fig. 3: eine schematische Darstellung eines beispielhaften in den aus Vollmaterial bestehenden Grundkörper gemäß Fig. 2 geschnittenen Gewindes,
- Fig. 4: eine schematische Darstellung einer beispielhaften Ausführungsform eines nach dem erfindungsgemäßen Verfahren hergestellten erfindungsgemäßen Rotors, der durch das Einbringen von Freistichen in den mit einem Gewinde versehenen Grundkörper gemäß Fig. 3 erhalten wurde,
- Fig. 5: eine schematische Darstellung beispielhafter, in den aus Vollmaterial bestehenden Grundkörper gemäß Fig. 2 eingebrachter Freistiche,
- Fig. 6: eine schematische Darstellung einer beispielhaften Ausführungsform eines nach dem erfindungsgemäßen Verfahren hergestellten erfindungsgemäßen Rotors, der durch das Schneiden eines Gewindes in den mit Freistichen versehenen Grundkörper gemäß Fig. 5 erhalten wurde, und
- Fig. 7: eine schematische Darstellung einer nach dem erfindungsgemäßen Verfahren hergestellten beispielhaften Rotorschaufelstruktur eines erfindungsgemäßen Rotors.

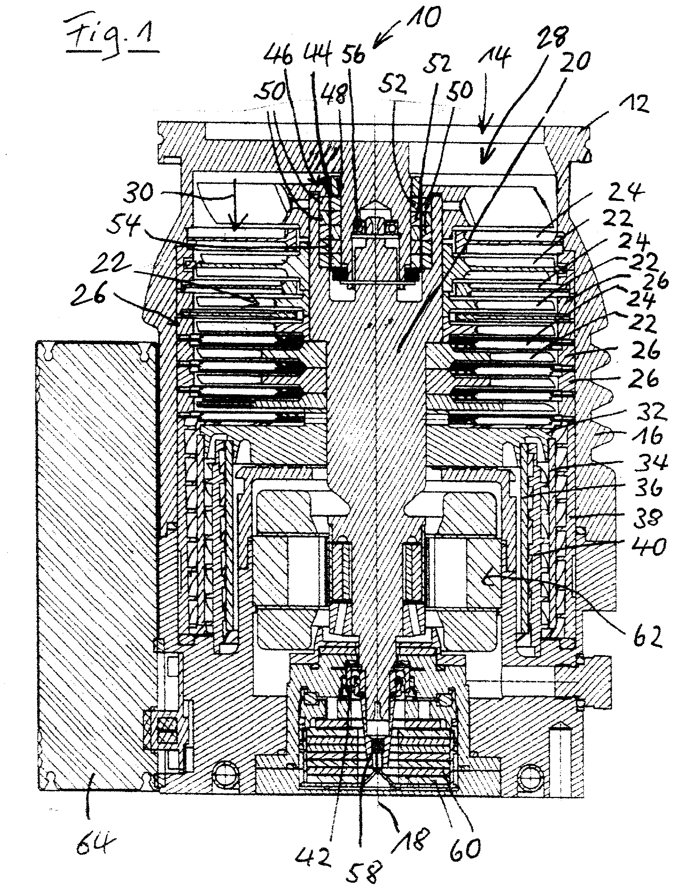

Fig. 1 zeigt in schematischer Darstellung eine beispielhafte Ausführungsform einer Vakuumpumpe 10, die mit einem erfindungsgemäßen Rotor versehen werden kann.

Die in Fig. 1 gezeigte Vakuumpumpe umfasst einen von einem Einlassflansch 12 umgebenen Pumpeneinlass 14 sowie mehrere Pumpstufen zur Förderung des an dem Pumpeneinlass 14 anstehenden Gases zu einem in Fig. 1 nicht dargestellten Pumpenauslass. Die Vakuumpumpe umfasst einen Stator mit einem statischen Gehäuse 16 und einen in dem Gehäuse 16 angeordneten Rotor mit einer um eine Rotationsachse 18 drehbar gelagerten Rotorwelle 20.

Die Vakuumpumpe ist als Turbomolekularpumpe ausgebildet und umfasst mehrere pumpwirksam miteinander in Serie geschaltete turbomolekulare Pumpstufen mit mehreren mit der Rotorwelle 20 verbundenen turbomolekularen Rotorscheiben 22 und mehreren in axialer Richtung zwischen den Rotorscheiben 22 angeordneten und in dem Gehäuse 16 festgelegten turbomolekularen Statorscheiben 24, die durch Distanzringe 26 in einem gewünschten axialen Abstand zueinander gehalten sind. Die Rotorscheiben 22 und Statorscheiben 24 stellen in einem Schöpfbereich 28 eine in Richtung des Pfeils 30 gerichtete axiale Pumpwirkung bereit.

Die Vakuumpumpe umfasst zudem drei in radialer Richtung ineinander angeordnete und pumpwirksam miteinander in Serie geschaltete Holweck-Pumpstufen. Der rotorseitige Teil der Holweck-Pumpstufen umfasst eine mit der Rotorwelle 20 verbundene Rotornabe 32 und zwei an der Rotornabe 32 befestigte und von dieser getragene zylindermantelförmige Holweck-Rotorhülsen 34, 36, die koaxial zu der Rotorachse 18 orientiert und in radialer Richtung ineinander geschachtelt sind. Ferner sind zwei zylindermantelförmige Holweck-Statorhülsen 38, 40 vorgesehen, die ebenfalls koaxial zu der Rotorachse 18 orientiert und in radialer Richtung ineinander geschachtelt sind. Die pumpaktiven Oberflächen der Holweck-Pumpstufen sind jeweils durch die einander unter Ausbildung eines engen radialen Holweck-Spalts gegenüberliegenden radialen Mantelflächen jeweils einer Holweck-Rotorhülse 34, 36 und einer Holweck-Statorhülse 38, 40 gebildet. Dabei ist jeweils eine der pumpaktiven Oberflächen glatt ausgebildet, im vorliegenden Fall die der Holweck-Rotorhülse 34 bzw. 36, und die gegenüberliegende pumpaktive Oberfläche der Holweck-Statorhülse 38, 40 weist eine Strukturierung mit schraubenlinienförmig um die Rotationsachse 18 herum in axialer Richtung verlaufenden Nuten auf, in denen durch die Rotation des Rotors das Gas vorangetrieben und dadurch gepumpt wird.

Die drehbare Lagerung der Rotorwelle 20 wird durch ein Wälzlager 42 im Bereich des Pumpenauslasses und ein Permanentmagnetlager 44 im Bereich des Pumpeneinlasses 14 bewirkt.

Das Permanentmagnetlager 44 umfasst eine rotorseitige Lagerhälfte 46 und eine statorseitige Lagerhälfte 48, die jeweils einen Ringstapel aus mehreren in axialer Richtung aufeinandergestapelten permanentmagnetischen Ringen 50, 52 umfassen, wobei die Magnetringe 50, 52 unter Ausbildung eines radialen Lagerspalts 54 einander gegenüberliegen.

Innerhalb des Permanentmagnetlagers 44 ist ein Not- oder Fanglager 56 vorgesehen, das als ungeschmiertes Wälzlager ausgebildet ist und im normalen Betrieb der Vakuumpumpe ohne Berührung leerläuft und erst bei einer übermäßigen radialen Auslenkung des Rotors gegenüber dem Stator in Eingriff gelangt, um einen radialen Anschlag für den Rotor zu bilden, der eine Kollision der rotorseitigen Strukturen mit den statorseitigen Strukturen verhindert.

Im Bereich des Wälzlagers 42 ist an der Rotorwelle 20 eine konische Spritzmutter 58 mit einem zu dem Wälzlager 42 hin zunehmenden Außendurchmesser vorgesehen, die mit einem Abstreifer eines mehrere mit einem Betriebsmittel, wie z.B. einem Schmiermittel, getränkte saugfähige Scheiben 60 umfassenden Betriebsmittelspeichers in gleitendem Kontakt steht. Im Betrieb wird das Betriebsmittel durch kapillare Wirkung von dem Betriebsmittelspeicher über den Abstreifer auf die rotierende Spritzmutter 58 übertragen und infolge der Zentrifugalkraft entlang der Spritzmutter 58 in Richtung des größer werdenden Außendurchmessers der Spritzmutter 58 zu dem Wälzlager 42 hin gefördert, wo es z.B. eine schmierende Funktion erfüllt.

Die Vakuumpumpe 10 umfasst einen Antriebsmotor 62 zum drehenden Antreiben des Rotors, dessen Läufer durch die Rotorwelle 20 gebildet ist. Eine Steuereinheit 64 steuert den Antriebsmotor 62 an.

Die turbomolekularen Pumpstufen stellen in dem Schöpfbereich 28 eine Pumpwirkung in Richtung des Pfeils 30 bereit.

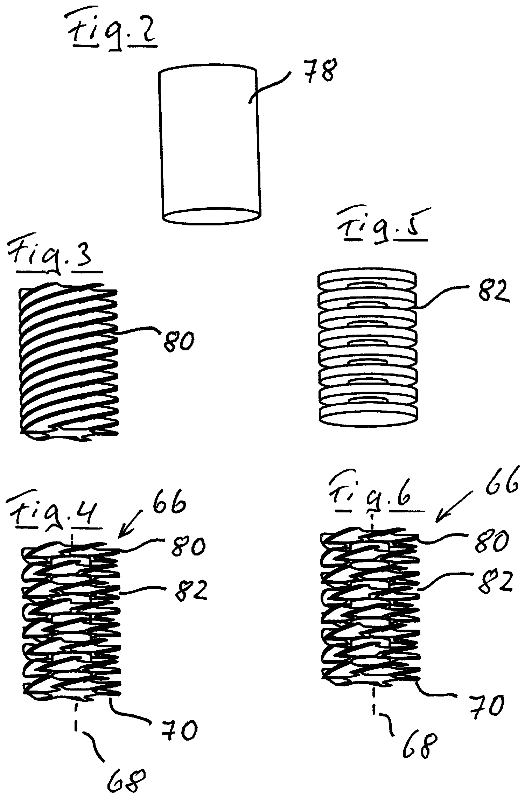

Beispielhafte Ausführungsformen eines erfindungsgemäßen Rotors 66 sowie beispielhafte Ausgestaltungen des erfindungsgemäßen Verfahrens zur Herstellung eines solchen Rotors werden im Folgenden anhand der Fig. 2 bis 7 näher beschrieben.

Der Rotor 66 umfasst jeweils eine um eine Rotorachse 68 drehbar gelagerte Rotorwelle 70 und mehrere an der Rotorwelle 70 angeordnete, in axialer Richtung aufeinanderfolgende, jeweils mehrere Rotorschaufeln 72 aufweisende Rotorebenen. Dabei ist die Anzahl von Rotorschaufeln 72 in einer jeweiligen Rotorebene im ansaugseitigen Hochvakuumbereich der Vakuumpumpe beispielsweise um das 2-bis 4-fache geringer als in einer jeweiligen Rotorebene im Vorvakuum- oder Niedervakuumbereich 76 der Vakuumpumpe.

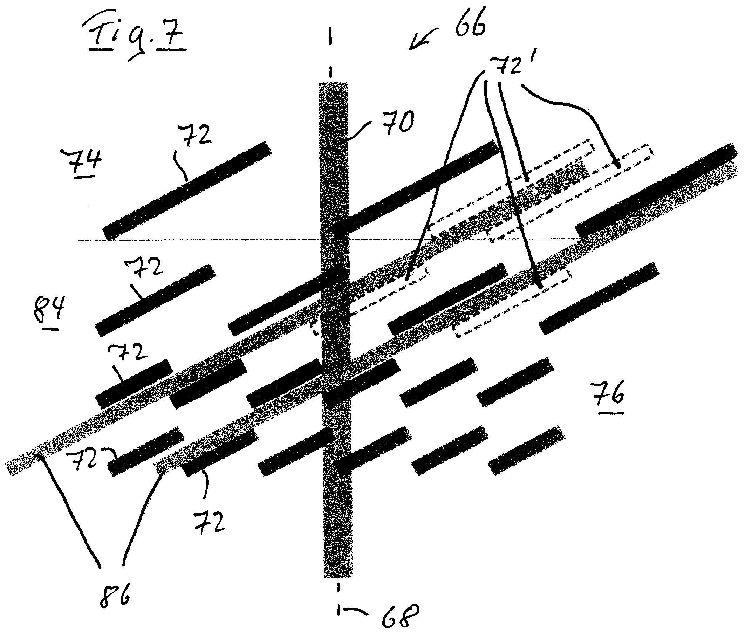

Der Rotor 66 kann in zumindest zwei in Axialrichtung aufeinanderfolgende Bereiche unterschiedlicher Anzahl von Rotorschaufeln 72 in den jeweiligen Rotorebenen unterteilt sein, wobei die Anzahl von Rotorschaufeln 72 in einer jeweiligen Rotorebene in Axialrichtung betrachtet ausgehend vom Hochvakuumbereich 74 der Vakuumpumpe zum Vorvakuum- oder Niedervakuumbereich 76 der Vakuumpumpe hin abnimmt (vgl. Fig. 7).

Dabei kann die Anzahl von Rotorschaufeln 72 in einer jeweiligen Rotorebene im Hochvakuumbereich um das 2-fache geringer sein als die Anzahl von Rotorschaufein 72 in einer jeweiligen Rotorebene im darauffolgenden Bereich der Vakuumpumpe.

Der Rotor 66 kann auch in drei in Axialrichtung aufeinanderfolgende Bereiche unterschiedlicher Anzahl von Rotorschaufeln 72 in den jeweiligen Rotorebenen unterteilt sein. Es kann dann die Anzahl von Rotorschaufeln 72 in einer jeweiligen Rotorebene im Hochvakuumbereich um das 2-fache geringer sein als die Anzahl von Rotorschaufeln 72 in einer jeweiligen Rotorebene im darauffolgenden Bereich der Vakuumpumpe und um das 3-fache oder 4-fache geringer sein als die Anzahl von Rotorschaufeln 72 in einer jeweiligen Rotorebene im Vorvakuum- oder Niedervakuumbereich 76 der Vakuumpumpe.

Der Rotor 66 kann auch in vier in Axialrichtung aufeinanderfolgende Bereiche unterschiedlicher Anzahl von Rotorschaufeln 72 in den jeweiligen Rotorebenen unterteilt sein. Dabei kann dann die Anzahl von Rotorschaufeln 72 in einer jeweiligen Rotorebene ausgehend vom Hochvakuumbereich 74 zum Vorvakuum- oder Niedervakuumbereich 76 der Vakuumpumpe hin im Verhältnis 1:2:3:4 zunehmen.

Wie insbesondere anhand der Fig. 7 zu erkennen ist, wird die Rotorschaufelstruktur ausgehend vom Vorvakuum- oder Niedervakuumbereich 76 zum Hochvakuumbereich 74 der Vakuumpumpe hin offener im Sinne von lichtdurchlässiger in axialer Richtung.

Der Rotor 66 umfasst schrägstehende Rotorschaufeln 72, deren Anstellwinkel gegenüber der jeweiligen zur Rotorachse 68 zumindest im Wesentlichen senkrechten Rotorebene in einem Bereich von 20° bis 35° liegt.

Der eine Rotorwelle 70 und mehrere an der Rotorwelle 70 angeordnete Rotorschaufeln 72 umfassende Rotor 66 wird einstückig aus einem aus Vollmaterial bestehenden zylindrischen Grundkörper 78 (vgl. Fig. 2) gefertigt. Zur Erzeugung von mehreren an der Rotorwelle 70 angeordneten, in axialer Richtung aufeinanderfolgenden, jeweils mehrere Rotorschaufeln 72 umfassenden Rotorebenen wird ein Gewinde 80 in den zylindrischen Grundkörper 78 geschnitten und werden in unterschiedlichen zur Rotorachse 68 jeweils zumindest im Wesentlichen senkrechten Ebenen Freistiche 82 in den Grundkörper 78 eingebracht werden (vgl. die Fig. 3 bis 6).

Anschließend wird zur Erzeugung eines in Axialrichtung betrachtet zum Hochvakuumbereich 74 der Vakuumpumpe hin offeneren, d.h. lichtdurchlässigeren Rotorschaufelstruktur ein Teil der erzeugten Rotorschaufeln 72 zumindest einer Rotorebene im Hochvakuumbereich 74 der Vakuumpumpe entfernt (vgl. Fig. 7).

Dabei kann beispielsweise zunächst das Gewinde 80 in den zylindrischen Grundkörper 78 geschnitten werden, wobei anschließend die Freistiche 82 in unterschiedlichen zur Rotorachse 68 jeweils zumindest im Wesentlichen senkrechten Ebenen eingebracht werden (vgl. die Fig. 3 und 4).

Alternativ können umgekehrt zunächst die Freistiche 82 in den Grundkörper 78 eingebracht werden, wobei anschließend das Gewinde 80 in den bereits mit den Freistichen 82 versehenen zylindrischen Grundkörper 78 geschnitten wird (vgl. die Fig. 5 und 6).

Dabei kann ein eingängiges oder mehrgängiges Gewinde 80 in den zylindrischen Grundkörper 78 geschnitten werden.

Das Gewinde 18 kann beispielsweise mittels einer kreisförmigen Sägescheibe oder Scheibenfräsers in den zylindrischen Grundkörper 78 geschnitten werden. Die Freistiche 82 können beispielsweise auf einer Drehbank oder ebenfalls mittels einer Sägescheibe oder Scheibenfräsers in den zylindrischen Grundkörper 78 eingebracht werden.

Durch unterschiedliche axiale Abstände zwischen den Freistichen 82 können Rotorschaufeln 72 entsprechend unterschiedlicher axialer Höhe erzeugt werden.

Es können schrägstehende Rotorschaufeln 72 erzeugt werden, deren Anstellwinkel gegenüber der jeweiligen zur Rotorachse 68 zumindest im Wesentlichen senkrechten Rotorebene durch die Steigung des Gewindes 80 im Bereich dieser Rotorebene bestimmt wird.

Fig. 2 zeigt den aus Vollmaterial bestehenden zylindrischen Grundkörper 78. In der Darstellung gemäß den Fig. 3 und 4 wird zunächst das Gewinde 80 in den aus Vollmaterial bestehenden Grundkörper 78 geschnitten, bevor die Freistiche 82 eingebracht werden. Dagegen werden in der Darstellung gemäß den Fig. 5 und 6 zunächst die Freistiche 82 in den aus Vollmaterial bestehenden Grundkörper 78 eingebracht, bevor das Gewinde 18 in den Grundkörper 78 geschnitten wird.

Mit den gemäß den Fig. 3 und 4 bzw. 5 und 6 vorgenommenen Verfahrensschritten ergeben sich jeweils zunächst Rotorebenen mit einer gleichen Anzahl von Rotorschaufeln 72.

Zur Erzeugung eines in Axialrichtung betrachtet zum Hochvakuumbereich 74 der Vakuumpumpe hin offeneren, d.h. lichtdurchlässigeren Rotorschaufelstruktur wird anschließend ein Teil der erzeugten Rotorschaufeln 72 zumindest einer Rotorebene im Hochvakuumbereich 72 der Vakuumpumpe entfernt (vgl. Fig. 7).

Dabei kann der Rotor 66 gemäß der Darstellung in Fig. 7 beispielsweise in drei in Axialrichtung aufeinanderfolgende Bereiche unterschiedlicher Anzahl von Rotorschaufeln 72 in den jeweiligen Rotorebenen unterteilt werden. Im vorliegenden Beispiel ist die Anzahl von Rotorschaufeln 72 in einer jeweiligen Rotorebene im Hochvakuumbereich 74 beispielsweise um das 2-fache geringer als die Anzahl von Rotorschaufeln 72 in einer jeweiligen Rotorebene im darauffolgenden Bereich der Vakuumpumpe, hier dem Mittelvakuumbereich 84, und um das 3-fache geringer als die Anzahl von Rotorschaufeln 72 in einer jeweiligen Rotorebene im Vorvakuum- oder Niedervakuumbereich 76 der Vakuumpumpe.

Dabei kann eine Rotorscheibe im Vorvakuum- oder Niedervakuumbereich 76 beispielsweise 36 Rotorschaufeln 72 besitzen. Im Mittelvakuumbereich 84 kann in einem weiteren Bearbeitungsschritt beispielsweise jede zweite Rotorschaufel 72 entfernt werden. Es sind dann in einer jeweiligen Rotorebene nur noch achtzehn Rotorschaufeln 72 vorhanden. Im Hochvakuumbereich werden in einer jeweiligen Rotorebene jeweils zwei aufeinanderfolgende Rotorschaufeln 72 entfernt, so dass in einer jeweiligen Rotorebene im Hochvakuumbereich 74 nur noch zwölf Rotorschaufeln 72 verbleiben. Dies ergibt eine Schaufelstruktur mit einem 1:2:3-Verhältnis.

Bei einer hier rein beispielhaft erwähnten alternativen Schaufelstruktur mit einer größeren maximalen Schaufelanzahl im Vorvakuum- oder Niedervakuumbereich und mit einem Verhältnis z.B. von 1:2:4 beträgt die Anzahl der Schaufeln beispielsweise 48, 24 und 12. Generell sind beliebige Verhältnisse möglich.

Die im Nachgang jeweils entfernten Rotorschaufeln 72' sind in Fig. 7 durch gestrichelte Linien angedeutet. Zudem sind in Fig. 7 auch Sägepfade 86 zu erkennen, wie sie sich beim Einbringen des Gewindes 80 in den aus Vollmaterial bestehenden Grundkörper 78 ergeben. Wie bereits erwähnt, ist jedoch auch eine davon abweichende Rotorschaufelstruktur denkbar.

Das gewünschte Überdeckungsverhältnis bzw. die Offenheit der Rotorschaufeln kann insbesondere durch unterschiedliche axiale Höhen der Rotorschaufeln 72 in den gewünschten Bereich erzielt werden.

Ein nach dem erfindungsgemäßen Verfahren hergestellter erfindungsgemäßer Rotor 66 kann beispielsweise in einer Vakuumpumpe 10 der in Fig. 1 dargestellten Art zum Einsatz kommen.

### Bezugszeichenliste

- 10: Vakuumpumpe
- 12: Einlassflansch
- 14: Pumpeneinlass
- 16: Gehäuse
- 18: Rotationsachse
- 20: Rotorwelle
- 22: Rotorscheibe
- 24: Statorscheibe
- 26: Distanzring
- 28: Schöpfbereich
- 30: Pfeil
- 32: Rotornabe
- 34: Holweck-Rotorhülse
- 36: Holweck-Rotorhülse
- 38: Holweck-Statorhülse
- 40: Holweck-Statorhülse
- 42: Wälzlager
- 44: Permanentmagnetlager
- 46: rotorseitige Lagerhälfte
- 48: statorseitige Lagerhälfte
- 50: permanentmagnetischer Ring
- 52: permanentmagnetischer Ring
- 54: radialer Lagerspalt
- 56: Not- oder Fanglager
- 58: konische Spritzmutter
- 60: saugfähige Scheibe
- 62: Antriebsmotor
- 64: Steuereinheit
- 66: Rotor
- 68: Rotorachse
- 70: Rotorwelle
- 72: Rotorschaufel
- 72': entfernte Rotorschaufel
- 74: Hochvakuumbereich
- 76: Vorvakuum- oder Niedervakuumbereich
- 78: zylindrischer Grundkörper
- 80: Gewinde
- 82: Freistich
- 84: Mittelvakuumbereich
- 86: Sägepfad

## Patentansprüche

1. Rotor (66) einer Vakuumpumpe, insbesondere Turbomolekularpumpe, mit einer um eine Rotorachse (68) drehbar gelagerten Rotorwelle (70) und mehreren an der Rotorwelle (70) angeordneten, in axialer Richtung aufeinanderfolgenden, jeweils mehrere Rotorschaufeln (72) umfassenden Rotorebenen, wobei die Anzahl von Rotorschaufeln (72) in einer jeweiligen Rotorebene im ansaugseitigen Hochvakuumbereich (74) der Vakuumpumpe geringer ist, insbesondere um das 2- bis 4-fache geringer ist, als in einer jeweiligen Rotorebene im Vorvakuum- oder Niedervakuumbereich (76) der Vakuumpumpe, wobei der Rotor (66) schrägstehende Rotorschaufeln (72) umfasst, wobei in jeder Rotorebene jeweils alle Rotorschaufeln (72) den gleichen Anstellwinkel besitzen,
**dadurch gekennzeichnet, dass**
dieser einheitliche Anstellwinkel in allen Rotorebenen gleich ist und der Anstellwinkel gegenüber der jeweiligen zur Rotorachse (68) senkrechten Rotorebene in einem Bereich von 20° bis 35° liegt.

2. Rotor nach Anspruch 1,
**dadurch gekennzeichnet, dass** der Rotor (66) in zumindest zwei in Axialrichtung aufeinanderfolgende Bereiche unterschiedlicher Anzahl von Rotorschaufeln (72) in den jeweiligen Rotorebenen unterteilt ist und die Anzahl von Rotorschaufeln (72) in einer jeweiligen Rotorebene in Axialrichtung betrachtet ausgehend vom Hochvakuumbereich (74) der Vakuumpumpe zum Vorvakuum- oder Niedervakuumbereich (76) der Vakuumpumpe hin zunimmt.

3. Rotor nach Anspruch 1 oder 2,
**dadurch gekennzeichnet, dass** der Rotor (66) in zwei in Axialrichtung aufeinanderfolgende Bereiche unterschiedlicher Anzahl von Rotorschaufeln (72) in den jeweiligen Rotorebenen unterteilt ist und die Anzahl von Rotorschaufeln in einer jeweiligen Rotorebene im Hochvakuumbereich (74) um das 2-fache geringer ist als die Anzahl von Rotorschaufeln (72) in einer jeweiligen Rotorebene im darauffolgenden Bereich der Vakuumpumpe.

4. Rotor nach Anspruch 1 oder 2,
**dadurch gekennzeichnet, dass** der Rotor (66) in drei in Axialrichtung aufeinanderfolgende Bereiche unterschiedlicher Anzahl von Rotorschaufeln (72) in den jeweiligen Rotorebenen unterteilt ist und die Anzahl von Rotorschaufeln (72) in einer jeweiligen Rotorebene im Hochvakuumbereich (74) um das 2-fache geringer ist als die Anzahl von Rotorschaufeln (72) in einer jeweiligen Rotorebene im darauffolgenden Bereich, insbesondere in einem Mittelvakuumbereich, der Vakuumpumpe und um das 3-fache oder 4-fache geringer ist als die Anzahl von Rotorschaufeln (72) in einer jeweiligen Rotorebene in einem Vorvakuum- oder Niedervakuumbereich (76) der Vakuumpumpe.

5. Rotor nach Anspruch 1 oder 2,
**dadurch gekennzeichnet, dass** der Rotor (66) in vier in Axialrichtung aufeinanderfolgende Bereiche unterschiedlicher Anzahl von Rotorschaufeln (72) in den jeweiligen Rotorebenen unterteilt ist und die Anzahl von Rotorschaufeln (72) in einer jeweiligen Rotorebene ausgehend vom Hochvakuumbereich (74) zum Vorvakuum- oder Niedervakuumbereich (76) der Vakuumpumpe hin im Verhältnis 1:2:3:4 zunimmt.

6. Rotor nach einem der vorstehenden Ansprüche,
**dadurch gekennzeichnet, dass** eine von den Rotorschaufeln (72) gebildete Rotorschaufelstruktur ausgehend vom Vorvakuum- oder Niedervakuumbereich (76) zum Hochvakuumbereich (74) der Vakuumpumpe hin offener, im Sinne einer Lichtdurchlässigkeit in axialer Richtung, wird.

7. Vakuumpumpe, insbesondere Turbomolekularpumpe, mit zumindest einem Rotor (66) nach einem der vorstehenden Ansprüche.

8. Verfahren zur Herstellung eines Rotors (66) einer Vakuumpumpe, insbesondere einer Turbomolekularpumpe, insbesondere zur Herstellung eines Rotors (66) einer Vakuumpumpe gemäß einem der Ansprüche 1 bis 6, bei dem der eine Rotorwelle (70) und mehrere an der Rotorwelle (70) angeordnete Rotorschaufeln (72) umfassende Rotor (66) einstückig aus einem aus Vollmaterial bestehenden zylindrischen Grundkörper (78) gefertigt wird, indem zur Erzeugung von mehreren an der Rotorwelle (70) angeordneten, in axialer Richtung aufeinanderfolgenden, jeweils mehrere Rotorschaufeln (72) umfassenden Rotorebenen ein Gewinde (80) in den zylindrischen Grundkörper (78) geschnitten und in unterschiedlichen zur Rotorachse (68) jeweils senkrechten Ebenen Freistiche (82) in den Grundkörper (78) eingebracht werden, **dadurch gekennzeichnet, dass** anschließend zur Erzeugung einer in Axialrichtung betrachtet zum Hochvakuumbereich (74) der Vakuumpumpe hin offeneren Rotorschaufelstruktur ein Teil der erzeugten Rotorschaufeln (72) zumindest einer Rotorebene im Hochvakuumbereich (74) der Vakuumpumpe entfernt wird.

9. Verfahren nach Anspruch 8, **dadurch gekennzeichnet, dass** zur Erzeugung der jeweils mehrere Rotorschaufeln (72) umfassenden Rotorebenen zunächst das Gewinde (80) in den zylindrischen Grundkörper (78) geschnitten wird und anschließend die Freistiche (82) in unterschiedlichen zur Rotorachse (68) jeweils senkrechten Ebenen eingebracht werden, oder umgekehrt.

10. Verfahren nach Anspruch 8 oder 9, **dadurch gekennzeichnet, dass** ein eingängiges oder mehrgängiges Gewinde (80) in den zylindrischen Grundkörper (78) geschnitten wird.

11. Verfahren nach einem der Ansprüche 8 bis 10, **dadurch gekennzeichnet, dass** das Gewinde (80) mittels einer kreisförmigen Sägescheibe oder Scheibenfräsers in den zylindrischen Grundkörper (78) geschnitten wird.

12. Verfahren nach einem der Ansprüche 8 bis 11, **dadurch gekennzeichnet, dass** die Freistiche (82) auf einer Drehbank oder mittels einer Sägescheibe oder Scheibenfräsers in den zylindrischen Grundkörper (78) eingebracht werden.

13. Verfahren nach einem der Ansprüche 8 bis 12, **dadurch gekennzeichnet, dass** durch unterschiedliche axiale Abstände zwischen den Freistichen (82) Rotorschaufeln (72) entsprechend unterschiedlicher axialer Höhe erzeugt werden.

14. Verfahren nach einem der Ansprüche 8 bis 13, **dadurch gekennzeichnet, dass** schrägstehende Rotorschaufeln (72) erzeugt werden, deren Anstellwinkel gegenüber der jeweiligen zur Rotorachse (68) senkrechten Rotorebene durch die Steigung des Gewindes (80) im Bereich dieser Rotorebene bestimmt wird.

## Claims

1. A rotor (66) of a vacuum pump, in particular of a turbomolecular pump, comprising a rotor shaft (70) rotatably supported about a rotor axis (68); and a plurality of rotor planes which are arranged at the rotor shaft (70), which follow one another in an axial direction and which each comprise a plurality of rotor vanes (72), wherein the number of rotor vanes (72) in a respective rotor plane in a suction-side high-vacuum region (74) of the vacuum pump is smaller than, in particular twice to four times as small as, in a respective rotor plane in a pre-vacuum or low-vacuum region (76) of the vacuum pump; and wherein the rotor (66) comprises slanted rotor vanes (72), with all the respective rotor vanes (72) having the same angle of incidence in each rotor plane,
**characterized in that**
this uniform angle of incidence is the same in all the rotor planes and the angle of incidence is in a range from 20° to 35° with respect to the respective rotor plane perpendicular to the rotor axis (68).

2. A rotor in accordance with claim 1,
**characterized in that** the rotor (66) is divided into at least two regions following one another in the axial direction and having different numbers of rotor vanes (72) in the respective rotor planes; and **in that** the number of rotor vanes (72) in a respective rotor plane, viewed in the axial direction, increases starting from the high-vacuum region (74) of the vacuum pump toward the pre-vacuum or low-vacuum region (76) of the vacuum pump.

3. A rotor in accordance with claim 1 or claim 2,
**characterized in that** the rotor (66) is divided into two regions following one another in the axial direction and having different numbers of rotor vanes (72) in the respective rotor planes; and **in that** the number of rotor vanes in a respective rotor plane in the high-vacuum region (74) is twice as small as the number of rotor vanes (72) in a respective rotor plane in the following region of the vacuum pump.

4. A rotor in accordance with claim 1 or claim 2,
**characterized in that** the rotor (66) is divided into three regions following one another in the axial direction and having different numbers of rotor vanes (72) in the respective rotor planes; and **in that** the number of rotor vanes (72) in a respective rotor plane in the high-vacuum region (74) is twice as small as the number of rotor vanes (72) in a respective rotor plane in the following region, in particular in a middle vacuum region, of the vacuum pump and is three times or four times as small as the number of rotor vanes (72) in a respective rotor plane in a pre-vacuum or low-vacuum region (76) of the vacuum pump.

5. A rotor in accordance with claim 1 or claim 2,
**characterized in that** the rotor (66) is divided into four regions following one another in the axial direction and having different numbers of rotor vanes (72) in the respective rotor planes; and **in that** the number of rotor vanes (72) in a respective rotor plane increases starting from the high-vacuum region (74) toward the pre-vacuum or low-vacuum region (76) of the vacuum pump in a ratio of 1:2:3:4.

6. A rotor in accordance with any one of the preceding claims,
**characterized in that** a rotor vane structure formed by the rotor vanes (72) becomes more open, in the sense of a light permeability in the axial direction, starting from the pre-vacuum or low-vacuum region (76) toward the high-vacuum region (74) of the vacuum pump.

7. A vacuum pump, in particular a turbomolecular pump, comprising at least one rotor (66) in accordance with any one of the preceding claims.

8. A method of manufacturing a rotor (66) of a vacuum pump, in particular of a turbomolecular pump, in particular of manufacturing a rotor (66) of a vacuum pump in accordance with any one of the claims 1 to 6, in which the rotor (66) comprising a rotor shaft (70) and a plurality of rotor vanes (72) arranged at the rotor shaft (70) is produced in one piece from a cylindrical base body (78) composed of solid material in that a thread (80) is cut into the cylindrical base body (78) and undercuts (82) are introduced into the base body (78) in different planes which are each perpendicular to the rotor axis (68) in order to produce a plurality of rotor planes which are arranged at the rotor shaft (70), which follow one another in the axial direction and which each comprise a plurality of rotor vanes (72),
**characterized in that**,
subsequently, some of the produced rotor vanes (72) of at least one rotor plane in the high-vacuum region (74) of the vacuum pump are removed in order to produce a rotor vane structure which is more open toward the high-vacuum region (74) of the vacuum pump, viewed in the axial direction.

9. A method in accordance with claim 8,
**characterized in that** the thread (80) is first cut into the cylindrical base body (78) and the undercuts (82) are subsequently introduced into different planes which are each perpendicular to the rotor axis (68) or vice versa in order to produce the rotor planes which each comprise a plurality of rotor vanes (72).

10. A method in accordance with claim 8 or claim 9,
**characterized in that** a single-start or multi-start thread (80) is cut into the cylindrical base body (78).

11. A method in accordance with any one of the claims 8 to 10,
**characterized in that** the thread (80) is cut into the cylindrical base body (78) by means of a circular saw blade or a side milling cutter.

12. A method in accordance with any one of the claims 8 to 11,
**characterized in that** the undercuts (82) are introduced into the cylindrical base body (78) on a lathe or by means of a saw blade or a side milling cutter.

13. A method in accordance with any one of the claims 8 to 12,
**characterized in that** rotor vanes (72) having correspondingly different axial heights are produced by different axial spacings between the undercuts (82).

14. A method in accordance with any one of the claims 8 to 13,
**characterized in that** slanted rotor vanes (72) are produced whose angle of incidence with respect to the respective rotor plane perpendicular to the rotor axis (68) is determined by the pitch of the thread (80) in the region of this rotor plane.

## Revendications

1. Rotor (66) d'une pompe à vide, en particulier d'une pompe turbomoléculaire, comportant un arbre de rotor (70) monté mobile en rotation autour d'un axe de rotor (68), et plusieurs plans de rotor agencés au niveau de l'arbre de rotor (70), successifs en direction axiale et comprenant chacun plusieurs aubes de rotor (72),
dans lequel
le nombre d'aubes de rotor (72) dans un plan de rotor respectif dans la zone à vide poussé (74) côté aspiration de la pompe à vide est plus petit, en particulier de 2 à 4 fois, que celui dans un plan de rotor respectif dans la zone à vide préliminaire ou à vide faible (76) de la pompe à vide,
le rotor (66) comprend des aubes de rotor (72) obliques,
dans chaque plan de rotor, toutes les aubes de rotor (72) respectives présentent le même angle de positionnement,
**caractérisé en ce que**
cet angle de positionnement uniforme est identique dans tous les plans de rotor, et l'angle de positionnement par rapport au plan de rotor respectif perpendiculaire à l'axe de rotor (68) est dans une plage de 20° à 35°.

2. Rotor selon la revendication 1,
**caractérisé en ce que**
le rotor (66) est subdivisé en au moins deux zones successives en direction axiale ayant différents nombres d'aubes de rotor (72) dans les plans de rotor respectifs, et le nombre d'aubes de rotor (72) dans un plan de rotor respectif, vu en direction axiale, augmente à partir de la zone à vide poussé (74) de la pompe à vide vers la zone à vide préliminaire ou à vide faible (76) de la pompe à vide.

3. Rotor selon la revendication 1 ou 2,
**caractérisé en ce que**
le rotor (66) est subdivisé en deux zones successives en direction axiale ayant différents nombres d'aubes de rotor (72) dans les plans de rotor respectifs, et le nombre d'aubes de rotor dans un plan de rotor respectif dans la zone à vide poussé (74) est 2 fois plus petit que le nombre d'aubes de rotor (72) dans un plan de rotor respectif dans la zone suivante de la pompe à vide.

4. Rotor selon la revendication 1 ou 2,
**caractérisé en ce que**
le rotor (66) est subdivisé en trois zones successives en direction axiale ayant différents nombres d'aubes de rotor (72) dans les plans de rotor respectifs, et le nombre d'aubes de rotor (72) dans un plan de rotor respectif dans la zone à vide poussé (74) est 2 fois plus petit que le nombre d'aubes de rotor (72) dans un plan de rotor respectif dans la zone suivante, en particulier dans une zone à vide moyen, de la pompe à vide, et est 3 ou 4 fois plus petit que le nombre d'aubes de rotor (72) dans un plan de rotor respectif dans une zone à vide préliminaire ou à vide faible (76) de la pompe à vide.

5. Rotor selon la revendication 1 ou 2,
**caractérisé en ce que**
le rotor (66) est subdivisé en quatre zones successives en direction axiale ayant différents nombres d'aubes de rotor (72) dans les plans de rotor respectifs, et le nombre d'aubes de rotor (72) dans un plan de rotor respectif augmente à partir de la zone à vide poussé (74) vers la zone à vide préliminaire ou à vide faible (76) de la pompe à vide dans un rapport de 1:2:3:4.

6. Rotor selon l'une des revendications précédentes,
**caractérisé en ce que**
une structure formée par les aubes de rotor (72) devient plus ouverte, en termes de perméabilité à la lumière en direction axiale, à partir de la zone à vide préliminaire ou à vide faible (76) vers la zone à vide poussé (74) de la pompe à vide.

7. Pompe à vide, en particulier pompe turbomoléculaire, comportant au moins un rotor (66) selon l'une des revendications précédentes.

8. Procédé de fabrication d'un rotor (66) d'une pompe à vide, en particulier d'une pompe turbomoléculaire, destiné en particulier à fabriquer un rotor (66) d'une pompe à vide selon l'une des revendications 1 à 6,
dans lequel
le rotor (66) comportant un arbre de rotor (70) et plusieurs aubes de rotor (72) agencées sur l'arbre de rotor (70) est réalisé d'une seule pièce à partir d'un corps de base (78) cylindrique constitué en matériau plein, par le fait de tailler un filetage (80) dans le corps de base (78) cylindrique pour générer plusieurs plans de rotor agencés sur l'arbre de rotor (70), successifs en direction axiale et comprenant chacun plusieurs aubes de rotor (72), et de ménager des rainures de dégagement (82) dans le corps de base (78) dans différents plans respectifs perpendiculaires à l'axe de rotor (68),
**caractérisé en ce que**
ensuite, en vue de générer une structure d'aubes de rotor qui, vue en direction axiale, est plus ouverte vers la zone à vide poussé (74) de la pompe à vide, une partie des aubes de rotor réalisées (72) d'au moins un plan de rotor dans la zone à vide poussé (74) de la pompe à vide est enlevée.

9. Procédé selon la revendication 8,
**caractérisé en ce que**
en vue de générer les plans de rotor comprenant chacun plusieurs aubes de rotor (72), le filetage (80) est tout d'abord taillé dans le corps de base (78) cylindrique et ensuite les rainures de dégagement (82) sont ménagées dans différents plans respectifs perpendiculaires à l'axe de rotor (68), ou inversement.

10. Procédé selon la revendication 8 ou 9,
**caractérisé en ce que**
un filetage (80) à pas simple ou à pas multiple est taillé dans le corps de base (78) cylindrique.

11. Procédé selon l'une des revendications 8 à 10,
**caractérisé en ce que**
le filetage (80) est taillé dans le corps de base (78) cylindrique au moyen d'une lame de scie circulaire ou d'une fraise disque.

12. Procédé selon l'une des revendications 8 à 11,
**caractérisé en ce que**
les rainures de dégagement (82) sont ménagées dans le corps de base (78) cylindrique sur un tour ou au moyen d'une lame de scie ou d'une fraise disque.

13. Procédé selon l'une des revendications 8 à 12,
**caractérisé en ce que**
grâce à différentes distances axiales entre les rainures de dégagement (82), des aubes de rotor (72) sont réalisées qui présentent différentes hauteurs axiales correspondantes.

14. Procédé selon l'une des revendications 8 à 13,
**caractérisé en ce que**
des aubes de rotor (72) obliques sont réalisées, dont l'angle de positionnement par rapport au plan de rotor respectif perpendiculaire à l'axe de rotor (68) est déterminé par le pas du filetage (80) au niveau dudit plan de rotor.
